Europäisches Patentamt

**European Patent Office**

Office européen des brevets

(11) Publication number: **0 145 473**
A2

# EUROPEAN PATENT APPLICATION

(21) Application number: **84308565.5**

(22) Date of filing: **10.12.84**

(51) Int. Cl.⁴: **B 42 D 15/02**, G 06 K 19/08

(30) Priority: **13.12.83 US 561098**

(43) Date of publication of application: **19.06.85**
**Bulletin 85/25**

(84) Designated Contracting States: **AT BE DE FR GB NL SE**

(71) Applicant: **COMPUTER IDENTIFICATION SYSTEMS, INC., 874- 57th Street, Sacramento California 95819 (US)**

(72) Inventor: **Phelps, Barry C., 2638 Kadema Drive, Sacramento, California 95825 (US)**

(74) Representative: **Newstead, Michael John et al, Page & Co. Temple Gate House Temple Gate, Bristol BS1 6PL (GB)**

(54) Engraved image identification card.

(57) An engraved image identification card (10) has a top ply comprising an opaque top layer (28) and a translucent bottom layer (30) with engraved scors (32) extending through the top layer into the bottom layer. A plurality of translucent layers (34, 36, 38) are disposed beneath the translucent bottom layer. Imprinted upon one or more of the surfaces of the translucent layers in close proximity beneath the engraved scores are bendet patterns, printed information or holographic images which form a composite background pattern.

1.

ENGRAVED IMAGE IDENTIFICATION CARD

Background Of The Invention

The present invention relates to identification tion cards and more particularly to an engraved identification card which includes at least one translucent layer to inhibit unauthorized changes.

Engraved identification cards and the methods for making them are well known. For example, in Oka, et al., U.S. Patent No. 3,897,964 and Oka, et al., U.S. Patent No. 3,930,924, there are disclosed engraved identification cards and the methods for making them. Typical electronic systems used to engrave such cards are further disclosed in Noda, et al., U.S. Patent No. 3,950,609 and Wada, et al., U.S. Patent No. 4,052,739. Utilizing these or similar engraving techniques, an image can be engraved in a composite layer card consisting of at least an opaque top layer and a translucent bottom layer by making a multiplicity of scores through the opaque layer into the translucent layer beneath it. By alter-

2.    0145473

nating the depth of the score, the width of the region between scores can be varied to generate light and dark regions which, when viewed as a composite, forms the desired image.

While such engraved identification cards can provide some security against possible unauthorized changes which can be made to the engraved region of the card, there is a need to create a card which is even more difficult to alter.

The present invention inhibits the creation of alternations by placing thin translucent layers having certain patterns or images imprinted upon their surfaces immediately beneath beneath the engraved portion of the card. The imprinted images or patterns beneath the engraved layer combine to create a composite background image which extends into the card body behind the engraved region. By placing such a background pattern behind and in near proximity to the engraved image, alterations will be made more difficult since it will be much more difficult to scrape off the engraved portion of the card without damaging one or more of the surfaces containing the imprinted images and patterns. If a portion of one or more of the imprinted surfaces should be damaged during the scraping of the engraved region, one attempting to alter the card would be required not only to replace the original engravings with a bogus engraving, but would also be required to reimprint a portion of one or more layers of the damaged pattern behind the engraved portion in such a way that it matched the color, spacial orientation and alignment of the undamaged pattern left on the surfaces of the translucent layers. Thus, it would be extremely difficult for one to properly reconstruct the composite pattern in its proper coloration and alignment.

Even if a forger were able to scrape off the engraved region of the card without damaging the bottom layers, he still could not simply re-engrave the card without damaging the imprinted matter beneath the engraved portion. However, due to the close proximity of the imprinted surfaces to the engravings it would be very difficult to scrape the engravings without also damaging the imprinted patterns beneath.

In addition to making it more difficult to alter, the present invention will enable even a lay person to quickly and readily observe any tampering by looking at the background pattern to see if it is continuous and unblemished.

Another advantage of the present invention is that the patterns which are placed upon the surfaces of the translucent layers can be formed using ultraviolet inks which would be difficult or impossible to photograph or photocopy. Therefore, one who wishes to attempt to photograph or photocopy a card in order to reproduce the back background pattern will be unable to do so.

4.

0145473

## Summary Of The Invention

An engraved identification card includes an opaque top layer disposed to cover at least a portion of a translucent bottom layer. An identifying image for each cardholder (for example the cardholder's picture or signature) is engraved through the top layer into the bottom layer. Beneath the top and bottom layers are one or more translucent layers on the surfaces of which bendet patterns, printed information, holographic patterns, or the like are imprinted. The combination results in a composite background pattern for the card.

The patterns placed on the surfaces of the translucent planar layers create a composite background pattern in close proximity behind the top and bottom layers. Therefore, if one attempts to scrape the top and bottom layers to remove the engraved image, the imprinted patterns beneath the engraved region will likely be removed or damaged as well.

In one embodiment, information, patterns, or holographic images can be placed upon the surfaces of the translucent layers using inks such as ultraviolet inks which are incapable of being photographed. Also, the present invention can be used in another embodiment, wherein an opaque layer is affixed below the translucent layers to provide contrast to the engraved region and the background patterns.

## Brief Description Of The Drawings

A complete understanding of the present invention and of the above and other advantages and features thereof may be gained from a consideration of the following description of the preferred embodiments taken in conjunction with the accompanying drawings in which:

Figure 1 is a front view showing the composite image of the engraved identification card in accordance with the present invention;

Figure 2 is an exaggerated exploded cross-sectional side plan view of an engraved identification such as that shown in Figure 1.

### Detailed Description Of The Preferred Embodiment

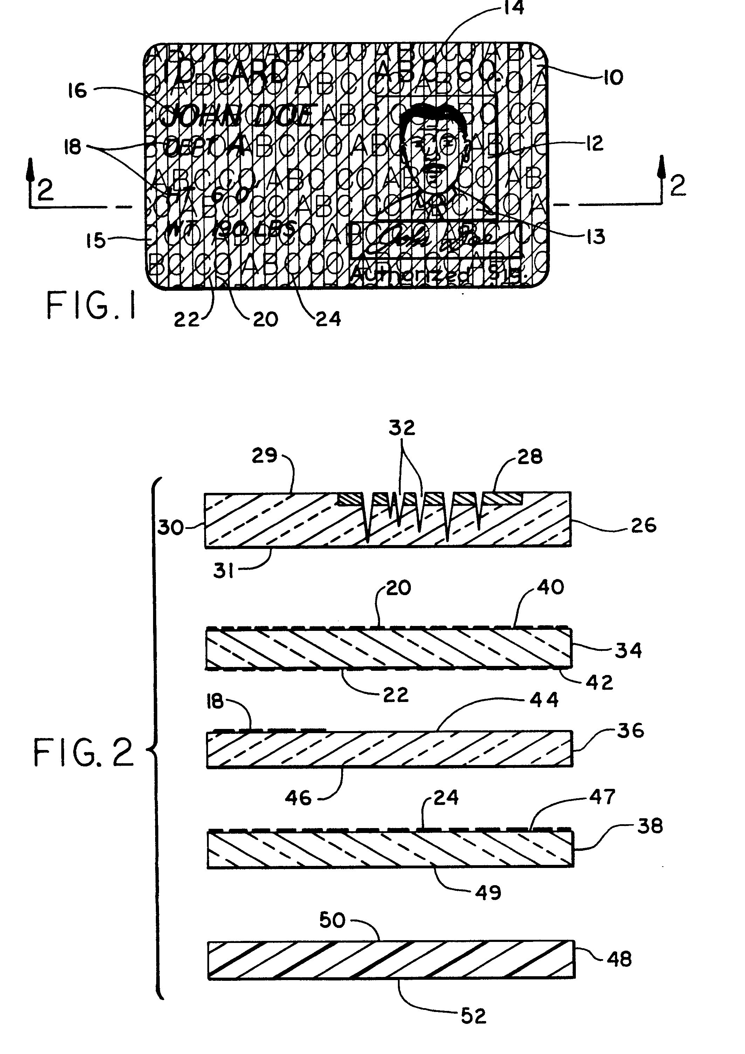

Referring initially to Figure 1, an engraved identification card 10 has an engraved region 12 which contains identification images 13, such as the user's picture and signature, and possibly a non-engraved region which may provide other information such as a company name 14, the user's name 16, and other desired identification information 18. Background patterns, such as vertical cross-hatching 20 and diagonal cross-hatching 22, appear over the entire surface 15 of the card 10 in repeated patterns to form what appears as a composite pattern. Additionally, other patterns, such as the repeating "ABC Co." pattern 24, can be placed as an additional background pattern on the card.

Referring now to Figure 2, a composite top 26 comprises an opaque top layer or inset region 28 in a first surface 29 of a translucent bottom layer 30. The translucent bottom layer 30 also has a second surface 31, directly opposite the first surface 29. Engraved scores 32 extend through the top layer 28 into the bottom layer 30 to form the engraved images 13 shown in Figure 1. The scores 32 are engraved into the composite top 26 at varying depths so that the greater the depth of the score 32, the more opaque top ply 28 will be removed and hence, the more bottom translucent ply 30 will be exposed. As the depth of the scores 32 decrease, a greater amount of the top ply 28 remains, thus forming light and dark regions which, when viewed as a composite, forms the desired image. The maximum depth of the scores is only very slightly less than the thickness of the top and bottom layers 28 and 30 so that at least some scores nearly penetrate the bottom surface 31 of the bottom layer 30.

A first translucent layer 34 lies directly beneath the engraved bottom layer 30 and in close proximity to the engraved scores. A second translucent layer 36 is positioned beneath the first layer 34 and a third translucent layer 38 is affixed beneath the second layer 36. The first layer 34 has a top surface 40 and a bottom surface 42, the top surface 40 being affixed to the second surface 31 of the bottom layer 30. On the top surface 40 and bottom surface 42, the patterns 20 and 22 respectively are imprinted. For example, the imprinted pattern 20 on the top surface 40 may be the vertical line pattern and the imprinted pattern 22 on the bottom surface 42 may be the dia-

0145473

7.

gonal pattern. The patterns which are imprinted upon the first planar layer 34 can be made out of standard printer's ink or can alternatively be imprinted with an ink, such as ultraviolet ink, which prevents the patterns from being reproduced by photochemical or photocopying means.

Of course, the patterns 20 and 22 may be any type of repeating or bendet pattern which would be appropriate for the desired use. Additionally, the first translucent layer 34 need not be imprinted on both its surfaces 40 and 42. However, it is preferable to have the pattern 20 imprinted at least on the top surface 40 since this first layer is placed directly beneath the engraved scores and would be the first layer scraped off in any attempt to remove the engraved region 12 from the card 10.

The second translucent layer 36, having a top surface 44 and a bottom surface 46 is located directly beneath the first layer 34. The top surface 44 is affixed to the bottom surface 42 of the first layer 34. Printed information such as the user's name 16 and the company name 14, along with the other identication information 18 (as shown in Figure 1) is placed on the top surface 44 and bottom surface 46. Of course, if the letters or numerals are imprinted on the bottom surface 46, the digits would have to be imprinted as the mirror image of the numerals or letters desired to be observed. Again, the ink which can be used on this layer can be conventional printer's ink or can be a nonreproducable ink such as ultraviolet ink.

A third translucent layer 38 having a top surface 47 and a bottom surface 49 is affixed to the bottom surface 46 of the second ply 36. Another pattern, such as a repeating holographic image 24, may be imprinted on either or both of the surfaces 47 and 49. The image on the third layer 38 can be any ornamental or identification image desired. The particular surface or surfaces 40, 42, 44, 46, 47 or 49, on which the patterns such as patterns 20, 22, 14, 16, 18, or 24 are imprinted may be selected such a manner as will provide the highest degree of security. Additionally, the printed matter on each surface of each layer 34, 36 and 38 may be imprinted using a holographic means.

In another embodiment of the invention, an opaque layer 48 having a top surface 50 and a bottom surface 52 can be affixed beneath the multiple layers 34, 36 and 38 to provide a contrasting background to the engraved and imprinted matter. Alternatively, this opaque layer 48 can further have written information, designs or patterns imprinted on the top surface 50 to enhance the composite image of the card. It will be appreciated that the present invention can have a multiplicity of different arrangements and combinations of translucent layers. The arrangements can differ in regard to the number of layers used, the actual information which is printed on the surfaces of the layers, and the order in which the respective layers can be arranged. Such different arrangements can be implemented without deviating from the spirit and scope of the present invention.

The translucent layers of the present invention may be made of any suitable material such as polyvinyl chloride (PVC). The top opaque ply 28 can be made from a plastic, ink or other suitable opaque material, while the bottom translucent layer 30 may be polyvinyl chloride. The thickness of the top layer 28 and bottom layer 30 is such as to have the scores 32 of maximum depth extend down towards the second surface 31 of the bottom translucent ply 30 as far as possible in order to have the translucent planar layers 34, 36 and 38 as close as possible to the engraved scores. Thus, when one attempts to scrape off the engraved image from the composite top 26, the scores 32 will be so close to the top planar layers that the person altering the card would be likely to damage one or more of the imprinted surfaces of the translucent layers.

The translucent planar layers 34, 36 and 38 are made out of a similar poly vinyl chloride material, however, these layers are much thinner than the bottom layer 30 since it is desirable to have as many layers scraped off the card when one attempts to scrape off the engraved region 12. It is preferred, therefore, that the translucent layers be as thin as one mil or less.

The top layer 28 and the bottom layer 30 can be applied to and made to adhere to each other by a suitable colorless transparent adhesive such as PVC adhesive which is well known in the art, or it could be heat bonded or fused together using other material bonding techniques well known in the art. Such bonding is done after the surface of the layers have been imprinted and only using a bonding method or structure which will not alter the imprinted image in an adverse way. Similarly, the other transparent planar layers can be bonded together and to the opaque layer 48 by using the same well known techniques of the art.

Prior to bonding the translucent layers together, the surfaces 40, 42, 44, 46,47, 49, and 50 should be imprinted with the desired patterns, printed information or holographic images by using standard printing operations using printers ink, or in the alternative, a non-photographic ink such as Armstrong Reflectolon, an ultraviolet ink manu-factured by the Armstrong company. The holographic image or pattern can be placed upon the third planar layer 38 using known holographic techniques in the art.

In using the engraved identification card, it is desirable to check the background patterns which appear throughout the card in order to determine whether the engraved portion has been tampered with. This can be done by placing the identification card against a contrasting background which will show the background patterns more easily. Alternatively, the card can be held up to a light to see if the pattern is continuous behind the engraved region of the card. Once a pattern appears to have been broken, erased, or does not align properly behind the engraved region of the card, the person should then know that the card

11.

0145473

has been tampered with. As used herein, "translucent" includes "transparent".

Although the embodiment disclosed here is representative of the present invention, the elements comprising the invention can assume a wide variety of shapes and forms, some of which can be quite different from the embodiment disclosed herein. Also, a multiplicity of different arrangements can be made using the translucent planar layers, while still remaining within the scope and spirit of the present invention.

CLAIMS

1.  An engraved identification card comprising:

a translucent bottom layer having a first surface and a second surface;

an opaque top layer disposed to cover at least a portion of the first surface of the bottom layer, wherein a plurality of engraved scores extend through the top layer into the bottom layer to form an engraved image;

at least one translucent first layer affixed to the second surface of the bottom layer, the first layer having a top surface and bottom surface; and

printed matter imprinted on at least one of the top and bottom surfaces of the first layer.

2.  An engraved identification card as defined in claim 1 wherein the printed matter is imprinted on both the top and bottom surfaces of the first layer.

3.  An engraved identification card as defined in claim 1 or 2 wherein the printed matter on at least one of the top and bottom surfaces comprises a bendet pattern.

4.  An engraved identification card as defined in claim 1 or 2 wherein the printed matter on at least one of the top and bottom surfaces comprises a holographic pattern.

5.  An engraved identification card as defined in claim 1 or 2 wherein the printed matter on at least one of the top and bottom surfaces comprises printed information.

6.  An engraved identification card as defined in claim 1 or 2 wherein the printed matter is imprinted with ink which is incapable of being photographed by photochemical means.

7.  An engraved identification card as defined in claim 1 or 2 wherein the printed matter is imprinted with ink which is incapable of being photocopied by photocopying means.

8. An engraved identification card as defined in any preceding claim further comprising an opaque layer affixed to the bottom surface of the first planar layer.

9. An engraved identification card as defined in any preceding claim wherein at least some of the engraved scores extend through the top layer into the bottom layer in close proximity to the second surface of the bottom layer.

10. An engraved identification card as defined in any preceding claim wherein the translucent first layer has a thickness less than about 1 mil.

11. An engraved identification card as defined in any preceding claim further comprising a translucent second layer having a top surface and a bottom surface, the top surface of the second layer being affixed to the bottom surface of the first layer, printed matter being imprinted on at least one of the top and bottom surfaces of the second layer.

12. An engraved identification card as defined in claim 11 wherein the  printed matter on at least one of the top and bottom surfaces of the second layer comprises a bendet pattern.

13. An engraved identification card as defined in claim 11 wherein the printed matter on at least one of the top and bottom surfaces of the second layer comprises a holographic pattern.

14. An engraved identification card as defined in claim 11 wherein the printed matter on at least one of the top and bottom surfaces of the second layer comprises printed information.

15. An engraved identification card as defined in any of claims 11 to 14 further comprising an opaque layer affixed to the bottom surface of the second planar layer.

16. An engraved identification card comprising:

a translucent bottom layer having a first surface and a second surface;

an opaque top layer disposed to cover at least a portion of the first surface of the bottom layer, wherein a plurality of engraved scores extend through the top layer into the bottom layer to form an engraved image;

a plurality of translucent layers joined together in a stacked configuration, the layers being affixed to the second surface of the bottom layer, each layer having a top surface and a bottom surface; and

/ printed matter disposed on at least one of the plurality of top and bottom surfaces of the translucent layers.

17. An engraved identification card as defined in claim 16 further comprising an opaque layer affixed to the bottom surface of the translucent layers.

18. An engraved identification card as defined in claim 16 or 17 wherein the plurality of translucent layers comprises:

a translucent first layer having a bendet pattern printed upon the top and bottom surface;

a translucent second layer having a bendet pattern printed upon the top and bottom surface;

and a translucent third layer having printed words upon the top surface.

19. An engraved identification card as defined in any of claims 16 to 18 wherein at least some of the engraved scores extend through the top layer into the bottom layer in close proximity to the second surface of the bottom layer.

20. An engraved identification card as defined in any of claims 16 to 19 wherein each translucent layer has a thickness less than about 1 mil.

0145473
1/1

FIG.1

FIG.2